# EUROPÄISCHE PATENTSCHRIFT

(11) **EP 3 619 074 B1**
(45) Veröffentlichungstag und Bekanntmachung des Hinweises auf die Patenterteilung: **07.04.2021**
(21) Anmeldenummer: 18721040.6
(22) Anmeldetag: 30.04.2018
(51) Int. Cl.: B60K 35/00, G02B 27/00, G02B 27/01, B60R 11/02

(54) **MOBILE SENSORVORRICHTUNG FÜR EIN IN EINEM FAHRZEUG EINSETZBARES AM KOPF TRAGBARES VISUELLES AUSGABEGERÄT UND VERFAHREN ZUM BETREIBEN EINES ANZEIGESYSTEMS**
MOBILE SENSOR APPARATUS FOR A HEAD-WORN VISUAL OUTPUT DEVICE USABLE IN A VEHICLE, AND METHOD FOR OPERATING A DISPLAY SYSTEM
DISPOSITIF DE CAPTEUR MOBILE POUR UN APPAREIL DE SORTIE VISUEL POUVANT ÊTRE PORTÉ SUR LA TÊTE, POUVANT ÊTRE UTILISÉ DANS UN VÉHICULE, ET PROCÉDÉ SERVANT À FAIRE FONCTIONNER UN SYSTÈME D'AFFICHAGE

(30) Priorität: 05.05.2017 DE 102017207600; 24.05.2017 DE 102017208881
(43) Veröffentlichungstag der Anmeldung: 11.03.2020
(73) Patentinhaber: Audi AG, 85045 Ingolstadt (DE)
(72) Erfinder: KÜHNE, Marcus, 92339 Beilngries (DE); PROFENDINER, Daniel, 85049 Ingolstadt (DE); WOLLNY, Nils, 80538 München (DE)
(86) Internationale Anmeldenummer: PCT/EP2018/061015
(87) Internationale Veröffentlichungsnummer: WO 2018/202614

(56) Entgegenhaltungen:
- DE-A1- 10 013 478
- DE-A1-102009 033 878
- US-B2- 9 274 337

## Beschreibung

Die Erfindung betrifft eine mobile Sensorvorrichtung für ein in einem Fahrzeug einsetzbares am Kopf tragbares visuelles Ausgabegerät und ein Verfahren zum Betreiben eines Anzeigesystems mit einer mobilen Sensorvorrichtung. Ferner betrifft die Erfindung noch ein Anzeigesystem mit einer mobilen Sensorvorrichtung und wenigstens einem am Kopf tragbaren visuellen Ausgabegerät Vorrichtungen und Verfahren des Stands der Technik sind aus den US 9 274 337 B2, DE 100 13 478 A1 und DE 10 2009 033878 A1 bekannt.

In Zukunft werden in Fahrzeugen zunehmend imersive Technologien, wie beispielsweise Virtual-Reality-Brillen und dergleichen, eingesetzt werden. Dabei ist ein anzunehmendes Anwendungsszenario, dass Fahrzeuginsassen während der Fahrt auch klassische Medieninhalte wie Filme, Konsolenspiele und dergleichen konsumieren wollen oder zum Beispiel im Internet surfen, was zumeist auf einer flachen Darstellungsfläche erfolgt. Hierbei kann das Problem der sogenannten "Simulator Sickness" auftreten. Dieses Problem, welches auch als Reisekrankheit, Bewegungskrankheit oder Kinetose bezeichnet wird, entsteht durch Widersprüche zwischen Sinneseindrücken, welche zum einen die räumliche Lage und Bewegung des Körpers und zum anderen die visuelle Wahrnehmung betreffen. Passen also die beispielsweise mittels einer Virtual-Reality-Brille angezeigten Inhalte nicht zur vom Fahrzeuginsassen wahrgenommenen Bewegung während der Fahrt in einem Kraftfahrzeug, so kann dem Fahrzeuginsassen übel werden.

Ein geeignetes Mittel zur Eliminierung oder zumindest zur Abschwächung dieses Effekts ist die Darstellung einer sich mit dem Richtungsvektor des betreffenden Fahrzeugs bewegenden Struktur, beispielsweise in einem peripheren Sichtbereich eines Trägers einer Virtual-Reality-Brille oder auch einer Augmented-Reality-Brille. Man schaut beispielsweise auf eine Art zentralen Screen, wobei um diesen zentralen Screen herum Strukturen adäquat zur Fahrzeugbewegung eingeblendet werden.

Es ist die Aufgabe der vorliegenden Erfindung, auf besonders einfache und zuverlässige Weise das Auftreten einer Kinetose bei einem Fahrzeuginsassen zu verhindern oder zumindest das Risiko eines Auftretens einer Kinetose zu reduzieren, der am Kopf ein visuelles Ausgabegerät trägt.

Diese Aufgabe wird durch eine mobile Sensorvorrichtung für ein in einem Fahrzeug einsetzbares am Kopf tragbares visuelles Ausgabegerät und durch ein Verfahren zum Betreiben eines Anzeigesystems mit einer mobilen Sensorvorrichtung mit den Merkmalen der unabhängigen Patentansprüche gelöst. Vorteilhafte Ausgestaltungen mit zweckmäßigen und nicht-trivialen Weiterbildungen der Erfindung sind in den abhängigen Ansprüchen angegeben.

Die mobile Sensorvorrichtung für ein in einem Fahrzeug einsetzbares am Kopf tragbares visuelles Ausgabegerät umfasst eine Erfassungseinrichtung zum Erfassen von Fahrzeugbewegungen des Fahrzeugs und eine Schnittstelle zum Übertragen von die Fahrzeugbewegung betreffenden Daten an das am Kopf tragbare visuellen Ausgabegerät.

Der Erfindung liegt dabei die Erkenntnis zugrunde, dass Fahrzeuge, insbesondere ältere Fahrzeuge, oftmals nicht mit einer Programmierschnittstelle, üblicherweise mit API abgekürzt, ausgestattet sind, über welche Fahrzeugbewegungen des Fahrzeugs betreffende Daten beispielsweise an eine elektronische Datenbrille übertragen beziehungsweise für diese bereitgestellt werden können. Bei der mobilen Sensorvorrichtung handelt es sich um eine eigenständige kleine Hardwarebox, welche Fahrzeugbewegungen des Fahrzeugs erfassen kann, wenn die Sensorvorrichtung in dem betreffenden Fahrzeug angeordnet ist. Über die Schnittstelle der mobilen Sensorvorrichtung kann diese dann die Fahrzeugbewegungen betreffende Daten an das am Kopf tragbare visuelle Ausgabegerät übermitteln, welches ein Fahrzeuginsasse während der Fahrt mit dem Fahrzeug aufgesetzt hat.

Mittels der mobilen Sensorvorrichtung können also auf besonders einfache Weise die Fahrzeugbewegungen des betreffenden Fahrzeugs betreffende Daten für ein am Kopf tragbares visuelles Ausgabegerät bereitgestellt werden. Gemäß der eingangs beschriebenen Vorgehensweise kann das am Kopf tragbare visuelle Ausgabegerät dann in Abhängigkeit von den bereitgestellten Daten, welche die Fahrzeugbewegung des Fahrzeugs beschreiben, neben den eigentlichen Inhalten, wie beispielsweise Medieninhalten, vorzugsweise in einem peripheren Anzeigefeld Strukturen anzeigen, welche mit der erfassten Bewegung des Fahrzeugs korrespondieren. Dadurch kann auf einfache und zuverlässige Weise verhindert werden, dass einem Träger des visuellen Ausgabegeräts während der Fahrt mit einem Fahrzeug schlecht wird.

Insbesondere ist es mittels der mobilen Sensorvorrichtung möglich, in beliebigen Fahrzeugen, wie beispielsweise Kraftfahrzeugen oder auch anderen Fahrzeugen, ein am Kopf tragbares visuelles Ausgabegerät, wie z.B. eine elektronische Datenbrille, zum Anzeigen von verschiedensten Informationen und Medieninhalten einzusetzen, ohne dass einem Träger des visuellen Ausgabegeräts dadurch übel wird. Ein Anwender des visuellen Ausgabegeräts muss lediglich die mobile Sensorvorrichtung mit sich führen, welche die Fahrzeugbewegungen erfasst und diesbezügliche Daten an das visuelle Ausgabegerät liefert, welches sodann, wie bereits beschrieben, dafür sorgen kann, dass einem Träger des visuellen Ausgabegeräts während der Fortbewegung mit dem Fahrzeug und bei aufgesetztem visuellen Ausgabegerät nicht übel wird.

Eine vorteilhafte Ausführungsform der Erfindung sieht vor, dass die Erfassungseinrichtung dazu ausgelegt ist, eine Bewegungsrichtung des Fahrzeugs zu erfassen. Vorzugsweise ist die Erfassungseinrichtung auch dazu ausgelegt, Beschleunigungen des Fahrzeugs zu erfassen. Diese können in beliebigen Raumrichtungen erfasst werden. Beispielsweise kann bei einer Fahrt mit einem Kraftfahrzeug erfasst werden, in welche Richtung sich das Kraftfahrzeug gerade bewegt und ob es gerade beschleunigt oder abgebremst wird. Kurvenfahrten und damit eingehergehende Querbeschleunigungen können ebenfalls erfasst werden. Darüber hinaus ist die Erfassungseinrichtung vorzugsweise dazu ausgelegt, eine Position des Fahrzeugs zu erfassen. Die Erfassungseinrichtung kann dafür beispielsweise ein GPS-Modul aufweisen. So können beim Betrieb des am Kopf tragbaren visuellen Ausgabegeräts nicht nur rein die Fahrzeugbewegungen sondern auch die Position des Fahrzeugs berücksichtigt werden, um beispielsweise die augenblickliche Position des Fahrzeugs betreffende Umgebungsinformationen einzublenden. Dies kann ebenfalls dazu beitragen, das Risiko des Auftretens einer Kinetose zu reduzieren. Das GPS-Modul kann z.B. in Form einer außenseitig an einem Fahrzeug befestigbaren Antenne, beispielsweise in Form einer magnetischen Dachantenne oder dergleichen, ausgebildet sein. Die GPS-Daten können beispielsweise über eine Bluetooth-Verbindung an die restliche, sich im Fahrzeug befindende Sensorvorrichtung übertragen werden. Zudem soll die Antenne - wenn nicht aktiv - auch elegant an der restlichen Sensorvorrichtung, welche im Fahrzeug angeordnet werden kann, magnetisch befestigt werden können. So können die Antenne und die restliche Sensorvorrichtung besonders einfach zusammen transportiert werden. Zudem ist es auch möglich, dass die Antenne einen Clip aufweist, mittels welchem die als GPS-Empfänger dienende Antennen an einem Fenster eines Fahrzeugs befestigbar ist. Durch das außenseitig an einem Fahrzeug anbringbare GPS-Modul können besonders exakte Positionsdaten bereitgestellt werden.

Eine weitere vorteilhafte Ausführungsform der Erfindung sieht vor, dass die Erfassungseinrichtung eine mit dem Fahrzeug koppelbare Datenschnittstelle zum Erfassen der Fahrzeugbewegungen aufweist. Die Erfassungseinrichtung kann beispielsweise einen entsprechenden Stecker aufweisen, welcher in eine fahrzeugseitige USB-Schnittstelle oder auch in eine fahrzeugseitige Diagnosebuchse eingesteckt werden kann. Auf diese Weise kann die mobile Sensorvorrichtung ganz einfach mit dem Fahrzeug gekoppelt werden, um verschiedenste Daten bezüglich der Fahrzeugbewegungen zu erhalten. Zudem ist es auch möglich, dass die Erfassungseinrichtung drahtlos, vorzugsweise über eine fahrzeugseitig bereitgestellte WLAN-Schnittstelle, mit einer fahrzeugseitigen Main Unit, also einer Datenverarbeitungseinrichtung, gekoppelt wird, welche ausgewählte Daten bezüglich der Fahrzeugbewegungen bereitstellt.

Alternativ oder zusätzlich ist es auch möglich, dass die Erfassungseinrichtung zumindest einen Sensor zum Erfassen der Fahrzeugbewegungen aufweist. Darüber hinaus ist es auch möglich, dass die Erfassungseinrichtung vollständig selbstständig sämtliche die Fahrzeugbewegung betreffende Daten bereitstellen kann. Dies ist insbesondere dann von Vorteil, wenn fahrzeugseitig gar keine Schnittstellen vorhanden sind, um die mobile Sensorvorrichtung zur Erfassung der Fahrzeugbewegungen an das Kraftfahrzeug zu koppeln.

In weiterer vorteilhafter Ausgestaltung der Erfindung ist es vorgesehen, dass die Schnittstelle dazu ausgelegt ist, die die Fahrzeugbewegungen betreffenden Daten drahtlos und/oder kabelgebunden an das am Kopf tragebare visuelle Ausgabegerät zu übertragen. Beispielsweise kann die mobile Sensorvorrichtung die die Fahrzeugbewegungen betreffenden Daten über eine Bluetooth-Verbindung übertragen. Ferner ist es auch möglich, dass sowohl die mobile Sensorvorrichtung als auch das visuelle Ausgabegerät mit einem fahrzeugseitig bereitgestellten WLAN verbunden werden können. In dem Fall können die besagten, die Fahrzeugbewegungen betreffenden Daten über die WLAN-Verbindung übertragen werden. Alternativ oder zusätzlich ist es auch möglich, dass die mobile Sensorvorrichtung einfach mittels eines Kabels an die das visuelle Ausgabegerät angeschlossen werden kann, um die die Fahrzeugbewegungen betreffenden Daten an das visuelle Ausgabegerät zu übertragen. In jedem Fall ist gewährleistet, dass die die Fahrzeugbewegungen betreffenden Daten zuverlässig an das visuelle Ausgabegerät übertragen werden können.

Gemäß der der Erfindung ist es vorgesehen, dass die mobile Sensorvorrichtung die Form eines Getränkebehälters, insbesondere einer Getränkedose, aufweist, welche in einem Getränkehalter des Fahrzeugs aufnehmbar ist. Dadurch kann die mobile Sensorvorrichtung besonders sicher, insbesondere auch crashsicher, fahrzeugseitig aufgenommen werden. Zudem kann dadurch sichergestellt werden, dass die Sensorvorrichtung besonders einfach in beliebigen Fahrzeugen fest fixiert werden kann. Dies ist vorteilhaft für mittels der Sensorvorrichtung selbst gemessenen Fahrzeugbewegungen. Durch die Form eines Getränkebehälters, insbesondere bei einer genormten Dosen- oder Flaschenform, kann die Sensorvorrichtung in einem fahrzeugseitigen Getränkehalter zuverlässig fixiert werden, und zwar ohne dass sich Relativbewegungen zwischen Getränkehalter und Sensorvorrichtung ergeben. Die Sensorvorrichtung kann dadurch besonders gute Messdaten bezüglich der Fahrzeugbewegungen liefern.

Eine weitere vorteilhafte Ausführungsform der Erfindung sieht vor, dass die mobile Sensorvorrichtung eine Batterie und/oder einen mit dem Fahrzeug verbindbaren Stecker zur Energieversorgung aufweist. Die Energieversorgung der Sensorvorrichtung kann also zuverlässig gewährleistet werden.

In weiterer vorteilhafter Ausgestaltung der Erfindung ist es vorgesehen, dass die mobile Sensorvorrichtung eine weitere Schnittstelle zur digitalen Bild- und Tonübertragung aufweist, sodass digitale Bild- und Tondaten mittels der mobile Sensorvorrichtung empfangbar und an das am Kopf tragbare visuelle Ausgabegerät übertragbar sind. Bei der weiteren Schnittstelle kann es sich beispielsweise um eine HDMI-Schnittstelle handeln. So kann beispielsweise ein Streaming Media Stick, mittels welchem drahtlos Filme gestreamt werden können, in die HDMI-Schnittstelle eingesteckt werden. Über die mobile Sensorvorrichtung können so beispielsweise Filmdaten empfangen und an das am Kopf tragbare visuelle Ausgabegerät übertragen werden. Oder es kann z.B. auch eine Spielekonsole über die HDMI-Schnittstelle angeschlossen werden, sodass das am Kopf tragbare visuelle Ausgabegerät ganz einfach als Ausgabemittel für die Spielekonsole im Fahrzeug genutzt werden kann.

Das erfindungsgemäße Anzeigesystem umfasst die erfindungsgemäße mobile Sensorvorrichtung oder eine vorteilhafte Ausführungsform der mobilen Sensorvorrichtung und wenigstens ein am Kopf tragbares visuelles Ausgabegerät, welches dazu eingerichtet ist, in einem Teilbereich seiner Anzeigefläche eine mit den erfassten Fahrzeugbewegungen korrespondierende Struktur anzuzeigen, um bei einem das visuelle Ausgabegerät tragenden Fahrzeuginsassen einen Widerspruch zwischen optischen Sinneseindrücken und die räumliche Lage und/oder Bewegung des Fahrzeuginsassen betreffenden Sinneseindrücken zu reduzieren. Bei dem am Kopf tragbaren visuellen Ausgabegerät handelt es sich vorzugsweise um eine Virtual-Reality-Brille, eine Augmented-Reality-Brille oder um eine Augmented-Reality-Linse.

Bei dem erfindungsgemäßen Verfahren zum Betreiben des erfindungsgemäßen Anzeigesystems oder einer vorteilhaften Ausführungsform des erfindungsgemäßen Anzeigesystems werden mittels der Sensorvorrichtung Fahrzeugbewegungen des Fahrzeugs erfasst und die Fahrzeugbewegungen betreffende Daten an das am Kopf tragbare visuelle Ausgabegerät übertragen, welches in einem Teilbereich seiner Anzeigefläche eine mit den erfassten Fahrzeugbewegungen korrespondierende Struktur anzeigt, um bei einem das visuelle Ausgabegerät tragenden Fahrzeuginsassen einen Widerspruch zwischen optischen Sinneseindrücken und die räumliche Lage und/oder Bewegung des Fahrzeuginsassen betreffenden Sinneseindrücken zu reduzieren. Vorteilhafte Ausgestaltungen des erfindungsgemäßen Verfahrens sind als vorteilhafte Ausgestaltungen der mobilen Sensorvorrichtung oder des Anzeigesystems anzusehen, wobei die mobile Sensorvorrichtung beziehungsweise das Anzeigesystem insbesondere Mittel zur Durchführung der Verfahrensschritte aufweisen.

Weitere Vorteile, Merkmale und Einzelheiten der Erfindung ergeben sich aus der nachfolgenden Beschreibung eines bevorzugten Ausführungsbeispiels sowie anhand der Zeichnung.

Die Zeichnung zeigt in:

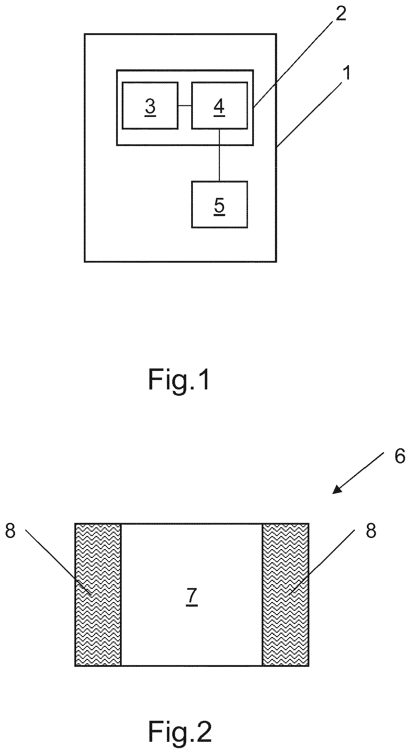

- Fig. 1: eine schematische Darstellung eines Anzeigesystems mit einer mobilen Sensorvorrichtung und einer elektronischen Datenbrille, wobei die mobile Sensorvorrichtung dazu ausgelegt ist, Fahrzeugbewegungen eines Fahrzeugs zu erfassen und diesbezügliche Daten der elektronischen Datenbrille bereitzustellen; und in
- Fig. 2: eine schematische Darstellung einer Anzeigefläche der elektronischen Datenbrille, wobei in einem seitlichen Peripheriebereich der Anzeigefläche entsprechend der erfassten Fahrzeugbewegungen Strukturen angezeigt werden, um bei einem die elektronische Datenbrille im Fahrzeug tragenden Fahrzeuginsassen das Auftreten von Übelkeit zu verhindern.

Ein Anzeigesystem 1 mit einer mobilen Sensorvorrichtung 2 ist in einer schematischen Darstellung in Fig. 1 gezeigt. Die mobile Sensorvorrichtung 2 umfasst eine Erfassungseinrichtung 3 zum Erfassen von Fahrzeugbewegungen eines Fahrzeugs und eine Schnittstelle 4 zum Übertragen von die Fahrzeugbewegungen betreffenden Daten an eine elektronische Datenbrille 5 des Anzeigesystems 1. Bei der elektronischen Datenbrille 5 kann es sich beispielsweise um eine Virtual-Reality-Brille oder auch um eine Augmented-Reality-Brille handeln. Statt der elektronischen Datenbrille 5 können aber auch andere am Kopf tragbare visuelle Ausgabegeräte eingesetzt werden, beispielsweise auch eine oder mehrere Augmented-Reality-Linsen.

Fahrzeuginsassen, insbesondere wenn es sich um Mitfahrer handelt, können die elektronische Datenbrille 5 aufsetzen, um sich während der Fahrt verschiedenste Inhalte, beispielsweise Medieninhalte wie Filme und dergleichen, Konsolenspiele oder auch Internetseiten anzeigen zu lassen. Während der Fahrt mit dem Fahrzeug kann es vorkommen, dass einem Träger einer solchen elektronischen Datenbrille 5 übel wird, insbesondere je größer die Diskrepanz zwischen den optischen Sinneseindrücken aufgrund der Einblendung der Inhalte mittels der elektronischen Datenbrille 5 und der Sinneseindrücke ist, welche die räumliche Lage und Bewegung des Trägers der elektronischen Datenbrille 5 betreffen.

Die mobile Sensorvorrichtung 2 ist eine eigenständige Hardwarebox, welche in beliebigen Fahrzeugen eingesetzt werden kann. Mittels der Erfassungseinrichtung 3 können verschiedenste, die Fahrzeugbewegungen des Fahrzeugs betreffende Größen erfasst und entsprechende Daten über die Schnittstelle 4 an die elektronische Datenbrille 5 übertragen werden. Die Erfassungseinrichtung 3 kann beispielsweise eine Bewegungsrichtung des Fahrzeugs erfassen. Ebenso kann die Erfassungseinrichtung 3 auch Beschleunigungen des Fahrzeugs erfassen. Ferner kann die Erfassungseinrichtung 3 auch eine Position des Fahrzeugs erfassen. Die Erfassungseinrichtung 3 kann beispielsweise über eine mit dem betreffenden Fahrzeug koppelbare Datenschnittstelle zum Erfassen der Fahrzeugbewegungen aufweisen. So kann die Erfassungseinrichtung 3 beispielsweise in eine Onboard-Schnittstelle des Fahrzeugs oder auch einfach in eine USB-Schnittstelle eingesteckt werden, um die verschiedenen Fahrzeugbewegungen zu erfassen. Alternativ oder zusätzlich ist es auch möglich, dass die Erfassungseinrichtung 3 eine oder mehrere Sensoren zum Erfassen der Fahrzeugbewegungen aufweist. Insbesondere ist es auch möglich, dass die mobile Sensorvorrichtung 2 vollkommen unabhängig von Fahrzeugen jeweilige Fahrzeugbewegungen erfassen kann. In dem Fall ist die mobile Sensorvorrichtung 2 mit einer entsprechenden Sensorik ausgestaltet, mittels welcher Bewegungen und Beschleunigungen und gegebenenfalls auch Positionsinformationen selbstständig erhoben werden können.

Bei der Schnittstelle 4 kann es sich sowohl um eine drahtlose als auch um eine kabelgebundene Schnittstelle handeln. Beispielsweise können die die Fahrzeugbewegung betreffenden Daten über eine Bluetooth-Verbindung, eine WLAN-Verbindung oder auch über eine Mobilfunkverbindung an die elektronische Datenbrille 5 übertragen werden. Alternativ oder zusätzlich ist es auch möglich, dass einfach eine Kabelverbindung zwischen der mobilen Sensorvorrichtung 2 und der elektronischen Datenbrille 5 hergestellt wird, beispielsweise indem einfach ein USB-Kabel in die elektronische Datenbrille 5 eingesteckt wird.

Die mobile Sensorvorrichtung 2 kann beispielsweise die Form einer Getränkedose aufweisen, sodass die mobile Sensorvorrichtung 2 zuverlässig und sicher in einem Getränkehalter des betreffenden Fahrzeugs aufgenommen und gehalten werden kann. Auch bei rasanterer Fahrweise und abrupten Fahrmanövern kann dadurch sichergestellt werden, dass die mobile Sensorvorrichtung 2 sicher im Fahrzeug gehalten wird. Zur Energieversorgung der mobilen Sensorvorrichtung 2 umfasst diese vorzugsweise eine Batterie. Zusätzlich kann die mobile Sensorvorrichtung 2 beispielsweise über einen Stecker mit dem betreffenden Fahrzeug verbunden werden, sodass die mobile Sensorvorrichtung 2 darüber auch mit Energie versorgt werden kann, wobei darüber hinaus so auch noch die Batterie der mobilen Sensorvorrichtung 2 aufgeladen werden kann.

In Fig. 2 ist eine Anzeigefläche 6 der elektronischen Datenbrille 5 schematisch dargestellt. Zum einen ist ein zentraler Anzeigebereich 7 zu erkennen, zum anderen sind zudem links und rechts davon noch periphere seitliche Anzeigebereiche 8 dargestellt. In Abhängigkeit von den mittels der mobilen Sensorvorrichtung 2 bereitgestellten Daten, welche die Bewegungen des Fahrzeugs betreffen, werden in den seitlich peripheren Anzeigebereichen 8 mit den erfassten Fahrzeugbewegungen korrespondierende Strukturen angezeigt. Dadurch können bei einem die elektronische Datenbrille 5 tragenden Fahrzeuginsassen Widersprüche zwischen optischen Sinneseindrücken und die räumliche Lage und/oder Bewegung des Fahrzeuginsassen betreffenden Sinneseindrücken reduziert oder vollständig aufgelöst werden.

So kann ein Fahrzeuginsasse bei aufgesetzter elektronischer Datenbrille 5 im zentralen Anzeigebereich 7 beispielsweise einen Film ansehen oder auch Inhalte eines Videospiels sehen. In den seitlich peripheren Anzeigebereichen 8 werden Strukturen, wie beispielsweise Pfeile oder auch andere Symbole, angezeigt, welche sich korrespondierend zu der erfassten Fahrzeugbewegung bewegen. Wird das Fahrzeug, in welchem der Fahrzeuginsasse mit der aufgesetzten elektronischen Datenbrille 5 sitzt, beispielsweise gerade stark beschleunigt, so werden die angezeigten Strukturen in den peripheren Bereichen 8 ebenfalls stark beschleunigt. Wird hingegen das Fahrzeug abrupt abgebremst, so wird die Fortbewegung der angezeigten Strukturen in den peripheren Anzeigebereichen 8 ebenfalls stark abgebremst. Die optische Verdeutlichung der aktuellen Fahrzeugbewegungen ist natürlich nicht nur auf die Anzeige in solchen seitlichen peripheren Anzeigebereichen 8 begrenzt. Die Formgebung der genannten Strukturen ist im Wesentlichen auch beliebig. Wichtig ist nur, dass der Träger der elektronischen Datenbrille 5 eine visuelle Rückmeldung darüber erhält, wie sich das betreffende Fahrzeug, und damit auch er selbst, gerade bewegt. Dadurch kann das Auftreten der sogenannten Simulator Sickness, welche auch als Reisekrankheit, Bewegungskrankheit oder Kinetose bezeichnet wird, in erheblichem Maße reduziert oder vollständig verhindert werden.

Natürlich sind auf Basis der die Fahrzeugbewegung betreffenden Daten auch andere Anwendungen möglich, die die Eigenbewegung des Fahrzeugs in die mittels der elektronischen Datenbrille 5 gezeigten Inhalte umsetzen. Die mobile Sensorvorrichtung 2 kann insbesondere vollständig unabhängig vom Fahrzeug funktionieren, in welchem die mobile Sensorvorrichtung 2 eingesetzt wird. Ein Benutzer braucht also lediglich die elektronische Datenbrille 5 und die mobile Sensorvorrichtung 2 in das betreffende Fahrzeug mitzunehmen. Sodann kann er sich mittels der elektronischen Datenbrille 5 während der Fahrt mit dem betreffenden Fahrzeug unterschiedlichste Inhalte anzeigen lassen, wobei die mobile Sensorvorrichtung 2 in der beschriebenen Weise Fahrzeugbewegungen erfasst und diesbezügliche Daten der elektronischen Datenbrille 5 bereitstellt, sodass das Auftreten von Übelkeit beim Träger der elektronischen Datenbrille 5 erheblich reduziert oder vollständig verhindert werden kann.

## Patentansprüche

1. Mobile Sensorvorrichtung (2) für ein in einem Fahrzeug einsetzbares am Kopf tragbares visuelles Ausgabegerät (5), umfassend
- eine Erfassungseinrichtung (3) zum Erfassen von Fahrzeugbewegungen des Fahrzeugs;
- eine Schnittstelle (4) zum Übertragen von die Fahrzeugbewegungen betreffenden Daten an das am Kopf tragbare visuelle Ausgabegerät (5)
**dadurch gekennzeichnet, dass**
die mobile Sensorvorrichtung (2) die Form eines Getränkebehälters aufweist, welcher in einem Getränkehalter des Fahrzeugs aufnehmbar ist, so dass die Sensorvorrichtung in dem fahrzeugseitigen Getränkehalter zuverlässig fixiert werden kann, und zwar ohne dass sich Relativbewegungen zwischen Getränkehalter und Sensorvorrichtung ergeben.

2. Mobile Sensorvorrichtung (2) nach Anspruch 1,
**dadurch gekennzeichnet, dass**
die Erfassungseinrichtung (3) dazu ausgelegt ist, eine Bewegungsrichtung des Fahrzeugs zu erfassen.

3. Mobile Sensorvorrichtung (2) nach Anspruch 1 oder 2,
**dadurch gekennzeichnet, dass**
die Erfassungseinrichtung (3) dazu ausgelegt ist, Beschleunigungen des Fahrzeugs zu erfassen.

4. Mobile Sensorvorrichtung (2) nach Anspruch 1 oder 2,
**dadurch gekennzeichnet, dass**
die Erfassungseinrichtung (3) dazu ausgelegt ist, eine Position des Fahrzeugs zu erfassen.

5. Mobile Sensorvorrichtung (2) nach einem der vorhergehenden Ansprüche,
**dadurch gekennzeichnet, dass**
die Erfassungseinrichtung (3) eine mit dem Fahrzeug koppelbare Datenschnittstelle zum Erfassen der Fahrzeugbewegungen aufweist.

6. Mobile Sensorvorrichtung (2) nach einem der vorhergehenden Ansprüche,
**dadurch gekennzeichnet, dass**
die Erfassungseinrichtung (3) zumindest einen Sensor zum Erfassen der Fahrzeugbewegungen aufweist.

7. Mobile Sensorvorrichtung (2) nach einem der vorhergehenden Ansprüche,
**dadurch gekennzeichnet, dass**
die Schnittstelle (4) dazu ausgelegt ist, die die Fahrzeugbewegungen betreffenden Daten drahtlos und/oder kabelgebunden an das am Kopf tragbare visuelle Ausgabegerät (5) zu übertragen.

8. Mobile Sensorvorrichtung (2) nach einem der vorhergehenden Ansprüche,
**dadurch gekennzeichnet, dass**
die mobile Sensorvorrichtung (2) die Form einer Getränkedose aufweist, welche in einem Getränkehalter des Fahrzeugs aufnehmbar ist.

9. Mobile Sensorvorrichtung (2) nach einem der vorhergehenden Ansprüche,
**dadurch gekennzeichnet, dass**
die mobile Sensorvorrichtung (2) eine Batterie und/oder einen mit dem Fahrzeug verbindbaren Stecker zur Energieversorgung aufweist.

10. Mobile Sensorvorrichtung (2) nach einem der vorhergehenden Ansprüche,
**dadurch gekennzeichnet, dass**
die mobile Sensorvorrichtung (2) eine weitere Schnittstelle zur digitalen Bild- und Tonübertragung aufweist, sodass digitale Bild- und Tondaten mittels der mobile Sensorvorrichtung (2) empfangbar und an das am Kopf tragbare visuelle Ausgabegerät (5) übertragbar sind.

11. Anzeigesystem (1) mit einer mobilen Sensorvorrichtung (2) nach einem der vorhergehenden Ansprüche und wenigstens ein am Kopf tragbares visuelle Ausgabegerät (5), welches dazu eingerichtet ist, in einem Teilbereich (8) seiner Anzeigefläche (6) eine mit den erfassten Fahrzeugbewegungen korrespondierende Struktur anzuzeigen, um bei einem das visuelle Ausgabegerät (5) tragenden Fahrzeuginsassen einen Widerspruch zwischen optischen Sinneseindrücken und die räumliche Lage und/oder Bewegung des Fahrzeuginsassen betreffenden Sinneseindrücken zu reduzieren.

12. Anzeigesystem (1) nach Anspruch 11,
**dadurch gekennzeichnet, dass**
das am Kopf tragbare visuelle Ausgabegerät (5) eine Virtual-Reality-Brille, eine Augmented-Reality-Brille oder eine Augmented-Reality-Linse ist.

13. Verfahren zum Betreiben eines Anzeigesystems (1) nach einem der Ansprüche 11 oder 12, bei welchem mittels der Sensorvorrichtung (2) Fahrzeugbewegungen des Fahrzeugs erfasst und die Fahrzeugbewegungen betreffende Daten an das am Kopf tragbare visuelle Ausgabegerät (5) übertragen werden, welches nur in seitlich peripheren Anzeigebereichen (8) seiner Anzeigefläche (6) eine mit den erfassten Fahrzeugbewegungen korrespondierende Struktur anzeigt, um bei einem das visuelle Ausgabegerät (5) tragenden Fahrzeuginsassen einen Widerspruch zwischen optischen Sinneseindrücken und die räumliche Lage und/oder Bewegung des Fahrzeuginsassen betreffenden Sinneseindrücken zu reduzieren.

## Claims

1. Mobile sensor apparatus (2) for a head-worn visual output device (5) usable in a vehicle, comprising
- a capturing device (3) for capturing vehicle movements of the vehicle;
- an interface (4) for transmitting data concerning the vehicle movements to the head-worn visual output device (5)
**characterised in that**
the mobile sensor apparatus (2) has the form of a beverage holder which can be accommodated in a beverage holder of the vehicle, such that the sensor apparatus can be reliably fixed in the beverage holder of the vehicle without relative movements resulting between beverage holder and sensor apparatus.

2. Mobile sensor apparatus (2) according to claim 1,
**characterised in that**
the capturing device (3) is configured to capture a direction of movement of the vehicle.

3. Mobile sensor apparatus (2) according to claim 1 or 2,
**characterised in that**
the capturing device (3) is configured to capture accelerations of the vehicle.

4. Mobile sensor apparatus (2) according to claim 1 or 2,
**characterised in that**
the capturing device (3) is configured to capture a position of the vehicle.

5. Mobile sensor apparatus (2) according to any of the preceding claims,
**characterised in that**
the capturing device (3) has a data interface which can be coupled with the vehicle, for capturing the vehicle movements.

6. Mobile sensor apparatus (2) according to any of the preceding claims,
**characterised in that**
the capturing device (3) has at least one sensor for capturing the vehicle movements.

7. Mobile sensor apparatus (2) according to any of the preceding claims,
**characterised in that**
the interface (4) is configured to transmit the data concerning the vehicle movements in a wireless and/or wired manner to the head-worn visual output device (5).

8. Mobile sensor apparatus (2) according to any of the preceding claims,
**characterised in that**
the mobile sensor apparatus (2) has the shape of a beverage can which can be accommodated in a beverage holder of the vehicle.

9. Mobile sensor apparatus (2) according to any of the preceding claims,
**characterised in that**
the mobile sensor apparatus (2) has a battery and/or a plug which can be connected with the vehicle for energy supply.

10. Mobile sensor apparatus (2) according to any of the preceding claims,
**characterised in that**
the mobile sensor apparatus (2) has a further interface for the digital transmission of image and sound, such that digital image and sound data can be received by means of the mobile sensor apparatus (2) and be transmitted to the head-worn visual output device (5).

11. Display system (1) having a mobile sensor apparatus (2) according to any of the preceding claims and at least one head-worn visual output device (5) which is configured in a partial region (8) of its display surface (6) to display a structure corresponding with the captured vehicle movements, in order, where a vehicle occupant wearing the visual output device (5) is concerned, to reduce a contradiction between optical sensory impressions and sensory impressions concerning the spatial position and/or movement of the vehicle occupant.

12. Display system (1) according to claim 11,
**characterised in that**
the head-worn visual output device (5) is a virtual-reality pair of spectacles, an augmented-reality pair of spectacles or an augmented-reality contact lens.

13. Method for operating a display system (1) according to any of claims 11 or 12, in which, by means of the sensor apparatus (2), vehicle movements of the vehicle are captured and the data concerning the vehicle movements are transmitted to the head-worn visual output device (5), which displays only in laterally peripheral display regions (8) of its display surface (6) a structure corresponding with the captured vehicle movements, in order, where a vehicle occupant wearing the visual output device (5) is concerned, to reduce a contradiction between optical sensory impressions and sensory impressions concerning the spatial position and/or movement of the vehicle occupant.

## Revendications

1. Dispositif de capteur mobile (2) pour un appareil de sortie (5) visuel pouvant être porté sur la tête, utilisable dans un véhicule, comprenant :
- un système de détection (3) pour la détection de mouvements du véhicule ;
- une interface (4) pour la transmission de données concernant les mouvements du véhicule à l'appareil de sortie (5) visuel pouvant être porté sur la tête,
**caractérisé en ce que**
le dispositif de capteur mobile (2) présente la forme d'un récipient de boisson qui peut être reçu dans un support de boisson du véhicule de sorte que le dispositif de capteur puisse être fixé de manière fiable dans le support de boisson côté véhicule, et ce sans qu'il ne résulte de mouvements relatifs entre le support de boisson et le dispositif de capteur.

2. Dispositif de capteur mobile (2) selon la revendication 1,
**caractérisé en ce que**
le système de détection (3) est conçu afin de détecter un sens de mouvement du véhicule.

3. Dispositif de capteur mobile (2) selon la revendication 1 ou 2,
**caractérisé en ce que**
le système de détection (3) est conçu afin de détecter des accélérations du véhicule.

4. Dispositif de capteur mobile (2) selon la revendication 1 ou 2,
**caractérisé en ce que**
le système de détection (3) est conçu afin de détecter une position du véhicule.

5. Dispositif de capteur mobile (2) selon l'une quelconque des revendications précédentes,
**caractérisé en ce que**
le système de détection (3) présente une interface de données pouvant être couplée au véhicule pour la détection des mouvements du véhicule.

6. Dispositif de capteur mobile (2) selon l'une quelconque des revendications précédentes,
**caractérisé en ce que**
le système de détection (3) présente au moins un capteur pour la détection des mouvements du véhicule.

7. Dispositif de capteur mobile (2) selon l'une quelconque des revendications précédentes,
**caractérisé en ce que**
l'interface (4) est conçue afin de transmettre les données concernant les mouvements du véhicule sans fil et/ou par câble à l'appareil de sortie (5) visuel pouvant être porté sur la tête.

8. Dispositif de capteur mobile (2) selon l'une quelconque des revendications précédentes,
**caractérisé en ce que**
le dispositif de capteur mobile (2) présente la forme d'une canette de boisson qui peut être reçue dans un support de boisson du véhicule.

9. Dispositif de capteur mobile (2) selon l'une quelconque des revendications précédentes,
**caractérisé en ce que**
le dispositif de capteur mobile (2) présente une batterie et/ou une fiche pouvant être reliée au véhicule pour l'alimentation en énergie.

10. Dispositif de capteur mobile (2) selon l'une quelconque des revendications précédentes,
**caractérisé en ce que**
le dispositif de capteur mobile (2) présente une autre interface à la transmission d'image et de son numérique de sorte que des données d'image et de son numériques puisse être reçues au moyen du dispositif de capteur mobile (2) et transmises à l'appareil de sortie (5) visuel pouvant être porté sur la tête.

11. Système d'affichage (1) avec un dispositif de capteur mobile (2) selon l'une quelconque des revendications précédentes et au moins un appareil de sortie (5) visuel pouvant être porté sur la tête qui est aménagé afin d'afficher dans une zone partielle (8) de sa surface d'affichage (6) une structure correspondant aux mouvements du véhicule détectés afin de réduire pour un occupant de véhicule portant l'appareil de sortie (5) visuel une contradiction entre des impressions sensorielles optiques et des impressions sensorielles concernant la position et/ou le mouvement spatial de l'occupant de véhicule.

12. Système d'affichage (1) selon la revendication 11,
**caractérisé en ce que**
l'appareil de sortie (5) visuel pouvant être porté sur la tête est une lunette de réalité virtuelle, une lunette de réalité augmentée ou une lentille de réalité augmentée.

13. Procédé de fonctionnement d'un système d'affichage (1) selon l'une quelconque des revendications 11 ou 12, pour lequel au moyen du dispositif de capteur (2) des mouvements du véhicule sont détectés et les données concernant des mouvements du véhicule sont transmises à l'appareil de sortie (5) visuel pouvant être porté sur la tête qui affiche seulement dans des zones d'affichage (8) périphériques latéralement de sa surface d'affichage (6) une structure correspondant aux mouvements du véhicule détectés afin de réduire pour un occupant de véhicule portant l'appareil de sortie (5) visuel une contradiction entre des impressions sensorielles optiques et des impressions sensorielles concernant la position et/ou le mouvement spatial de l'occupant de véhicule.
